# EUROPEAN PATENT APPLICATION

(11) **EP 1 835 315 A1**
(43) Date of publication of application: **19.09.2007**
(21) Application number: 07012835.0
(22) Date of filing: 05.08.2004
(51) Int. Cl.: G02B 6/138, G02B 6/26, G02B 6/42

(54) **Waveguide forming methods and waveguides fabricated therefrom**

(30) Priority: 09.09.2003 US 659464
(62) Divisional of application: 04809535.0
(71) Applicant: General Electric Company, Schenectady, NY 12345 (US)
(72) Inventor: Deng, Kung-Li, Waterford, NY 12188 (US); Gorczyca, Thomas Bert, Schenectady, NY 12303 (US); Guida, Renato, Wyantskill, NY 12198 (US); Nielsen, Matthew Christian, Scotia, NY 12302 (US); Shih, Min-Yi, Niskayuna, NY 12309 (US); Tolliver, Todd Ryan, Clifton Park, NY 12065 (US)
(74) Representative: Herrmann, Uwe

(57) **Abstract**

A waveguide (116) fabrication method includes depositing a photodefinable copolymer material (14) comprising methyl methacrylate, tetrafluoropropyl methacrylate, and an epoxy monomer; fixing optical elements (10, 12) relative to the copolymer material; sending light through at least one of the optical elements and copolymer material towards the other; volatilizing uncured monomer. Another waveguide (116) fabrication method includes: fixing optical elements (110, 112) relative to each other, each having an optical surface (11, 13); providing a copolymer blob (114) over the optical surfaces with sufficient surface tension to result in the copolymer blob having a curved surface (15); sending light through each of the optical elements towards the curved surface and the other; volatilizing uncured monomer. An optical path fabrication method comprises: fixing optical elements (70, 76) relative to each other, each having an optical surface (71, 77); translating and rotating a mirror (78) until aligned to optimally direct light from one of the optical elements to the other; securing the aligned mirror in position.

## Description

### BACKGROUND

The invention relates generally to aligning and self-forming waveguides (optical paths) for optoelectronic integration.

Optical alignment is used in most optoelectronic devices to couple light from one point to another and typically requires critical positioning accuracy on the order of a micrometer or fractions of a micrometer. Typically such positioning is a complex and expensive labor-intensive process.

Conventional pick-and-place machines typically position a chip or fiber with fair precision down to several micrometers. Active free-space alignment is then engaged with precision position control and monitoring techniques. In such alignment processes, a number of components are needed such as high-precision translational stages, micro-lenses, and precision fiber and chip holders.

For the manufacture of passive planar waveguides, there are basically three different conventional methods. A ridge waveguide process deposits both a clad and core layer on a substrate after which the core layer is patterned by either etching or photo patterning to result in a ridge of core material. A top layer of cladding is then applied to complete the waveguide. A trench waveguide starts by depositing a clad layer on a substrate which is then patterned by etching, development or embossing to obtain a trench. The trench is filled with core material which may also leave a similar thin layer across the entire surface. Again, a top clad layer is applied to complete the structure. "Diffused" planar waveguides are formed by coating a lower clad and core material over a substrate, defining the waveguide by UV exposure and depositing an upper clad layer over it. Reactant diffusion occurs from the unexposed core and surrounding clad layers into the exposed core area changing its refractive index to form the waveguide. Disadvantages of the ridge and trench processes include a potential for rough waveguide edges if etching is used, resulting in high light transmission losses, and difficulty in producing a gradient refractive index between the core and clad materials. Potential disadvantages for the diffused waveguides include low refractive index contrast between the core and clad layers and a reduced material selection for forming this type of structure.

In addition to planar alignment considerations, in some electro-optical applications, a sharp change of optical path (such as orthogonal, for example) is necessary in order to meet geometrical restrictions and other specific requirements. Typically the light path coming from the bottom is redirected in an upward direction. This task is relatively simple for multi-mode waveguides, where a forty-five degree surface can be machined at the end of a straight portion of a waveguide. However, such orthogonal coupling becomes difficult for single-mode waveguides due to geometrical and mechanical restrictions. For example, the waveguides typically change from a thickness range of about fifteen micrometers to about fifty micrometers for multi-mode down to about two micrometers to about six micrometers for single-mode. Many approaches are under investigation to find a suitable solution, but all share the common problems such as how to modify the surface of a single-mode waveguide that is only few micrometers thick in order to fabricate a forty-five degree slope. Further, there remains the question of how to align to a receiving optical fiber, or any other input/output structure, within this very demanding tolerance.

It would therefore be desirable to have a less complex technique for optical alignment.

### BRIEF DESCRIPTION

Briefly, in accordance with one embodiment of the present invention, a method of forming a waveguide comprises: depositing a photodefinable copolymer material comprising methyl methacrylate, tetrafluoropropyl methacrylate, and an epoxy monomer over a substrate; fixing optical elements relative to the photodefinable copolymer material; sending light through at least one of the optical elements and the photodefinable copolymer material towards the other of the optical elements; and volatilizing uncured monomer from the photodefinable copolymer material to form the waveguide.

In accordance with another embodiment of the present invention, a method of forming and using a waveguide comprises: depositing a photodefinable copolymer material over a substrate; fixing optical elements relative to the photodefinable copolymer material, at least one of the optical elements comprising a splitter; sending light through the at least one of the optical elements and the photodefinable copolymer material towards another of the optical elements, wherein sending comprises supplying light through the at least one of the optical elements through a first path of the splitter; volatilizing uncured monomer from the photodefinable copolymer material to form the waveguide; and using the waveguide by transmitting an optical signal through a second path of the splitter.

In accordance with another embodiment of the present invention, a method of forming a waveguide comprises: fixing optical elements relative to each other, each having an optical surface; providing a blob over at least portions of the optical surfaces of the optical elements, the blob comprising photodefinable copolymer material resulting in sufficient surface tension with respect to the optical surfaces to result in the blob having a curved surface; sending light through each of the optical elements and the blob towards the curved surface and another of the optical elements with an incident angle from one of the optical elements with respect to the curved surface being larger than a total internal reflection condition determined by an index of refraction difference between the blob and air surrounding the blob; and volatilizing uncured monomer from the blob to form the waveguide.

In accordance with another embodiment of the present invention, a method of forming a waveguide comprises: fixing optical elements relative to each other, each having an optical surface; aligning a mirror to direct light from one of the optical elements to the other of the optical elements; providing a photodefinable copolymer material between the optical surfaces and the mirror; sending light through at least one of the optical elements towards the other of the optical elements; and volatilizing uncured monomer from the photodefinable copolymer material to form the waveguide.

In accordance with another embodiment of the present invention, a method of forming an optical path comprises: fixing optical elements relative to each other, each having an optical surface; translating and rotating a mirror until the mirror is aligned to optimally direct light from one of the optical elements to the other of the optical elements; and securing the aligned mirror in position.

In accordance with another embodiment of the present invention, a waveguide comprises: a blob over optical surfaces of optical elements fixed relative to each other, the blob comprising a pre-cured copolymer material having sufficient surface tension with respect to the optical surfaces to form a curved surface, a core portion of the blob comprising a material having a higher index of refraction than another portion of the blob and forming a reflective path between the optical surfaces.

In accordance with another embodiment of the present invention, a waveguide comprises: optical elements fixed relative to each other, each having an optical surface; a mirror aligned to direct light from one of the optical elements to the other of the optical elements; and a photodefinable copolymer material between the optical surfaces and the mirror, a core portion of the photodefinable copolymer material comprising a material having a higher index of refraction than another portion of the photodefinable copolymer material and forming a reflective path between the optical surfaces.

In accordance with another embodiment of the present invention, an optical path comprises: optical elements fixed relative to each other, each having an optical surface; and a mirror situated on a fiber and aligned to optimally direct light from one of the optical elements to the other of the optical elements.

### DRAWINGS

These and other features, aspects, and advantages of the present invention will become better understood when the following detailed description is read with reference to the accompanying drawings in which like characters represent like parts throughout the drawings, wherein:
FIG. 1 is a top view of waveguide in accordance with one embodiment of the present invention.
FIG. 2 is a side view of the waveguide of FIG. 1.
FIG. 3 is a top view of waveguide in accordance with another embodiment of the present invention.
FIG. 4 is a side view of the waveguide of FIG. 3.
FIG. 5 is a perspective view of a partially fabricated waveguide in accordance with another embodiment of the present invention.
FIG. 6 is a perspective view of the fabricated waveguide of FIG. 5.
FIG. 7 is a perspective view of partially fabricated waveguides in accordance with other embodiments of the present invention.
FIG. 8 is a perspective view of the fabricated waveguides of FIG. 7.
FIG. 9 is a perspective view of a waveguide coupling arrangement in accordance with another embodiment of the present invention.
FIG. 10 is a top view of the waveguide coupling arrangement of FIG. 9.
FIG. 11 is a top view of a waveguide in accordance with another embodiment of the present invention.
FIG. 12 is a top view of a waveguide in accordance with another embodiment of the present invention.
FIG. 13 is a side view of a waveguide in accordance with another embodiment of the present invention.
FIG. 14 is a perspective view of an optical path formation arrangement in accordance with another embodiment of the present invention.
FIG. 15 is another perspective view of the optical path formation arrangement of FIG. 14.

### DETAILED DESCRIPTION

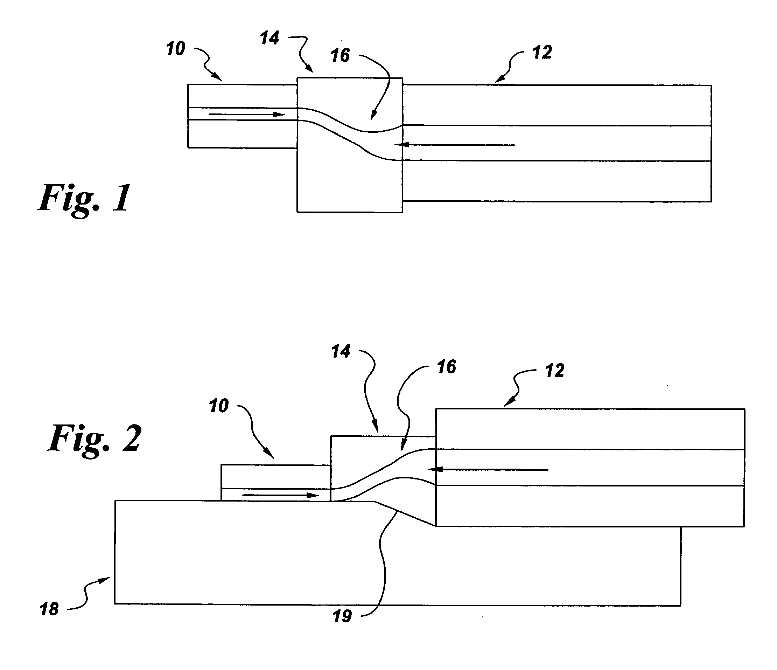

FIG. 1 is a top view of a waveguide 16 in accordance with one embodiment of the present invention, and FIG. 2 is a side view of the waveguide of FIG. 1. In the embodiment of FIGs. 1-2, a method of forming waveguide 16 comprises: depositing a photodefinable copolymer material 14 comprising methyl methacrylate, tetrafluoropropyl methacrylate, and an epoxy monomer over a substrate 18; fixing optical elements 10 and 12 relative to the photodefinable copolymer material; sending light through at least one of the optical elements and the photodefinable copolymer material towards the other of the optical elements; and volatilizing uncured monomer from the photodefinable copolymer material to form the waveguide. In a more specific embodiment, light is sent through each of the optical elements and the photodefinable copolymer material towards the other of the optical elements.

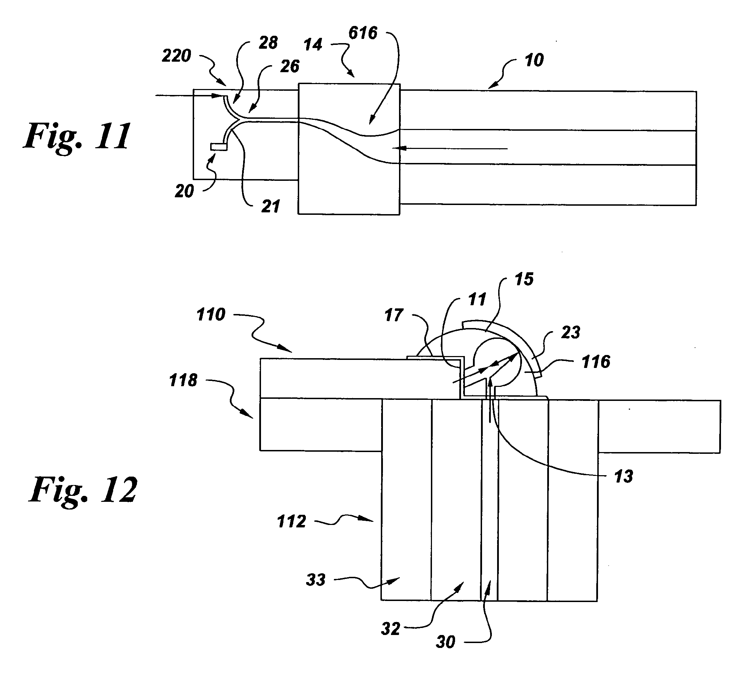

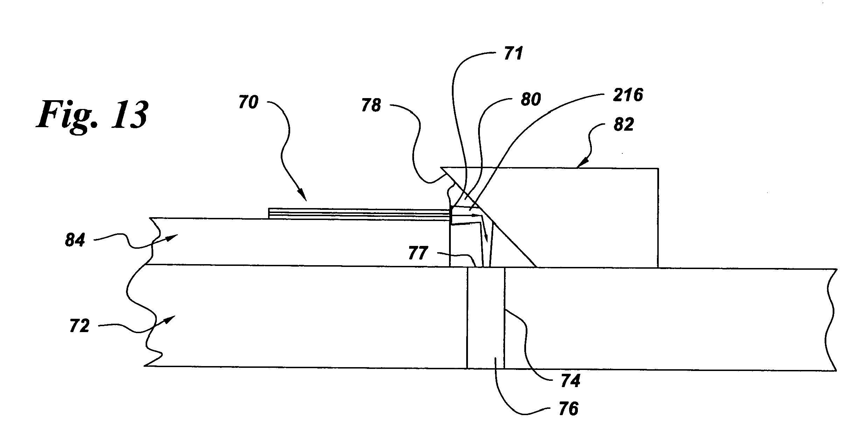

As used herein "fixing" means mechanically positioning the optical elements relative to each other in the same locations to be used for waveguide fabrication and later waveguide use. Also, as used herein, "towards the other of the optical elements" means either directly towards or, as shown in several examples of FIGs. 12 and 13 in a reflective direction towards. As used herein, "over" is for purposes of example, does not require the waveguide be used in a particular orientation, and includes embodiments wherein the photodefinable copolymer material is touching the substrate directly as well as embodiments wherein an intermediate layer exists between the photodefinable copolymer layer and the substrate. "Volatizing" typically includes diffusion of the monomer.

Fixing of the optical elements may occur after or prior to depositing. If fixing occurs prior to depositing, then depositing typically comprises depositing the photodefinable copolymer material between the optical elements.

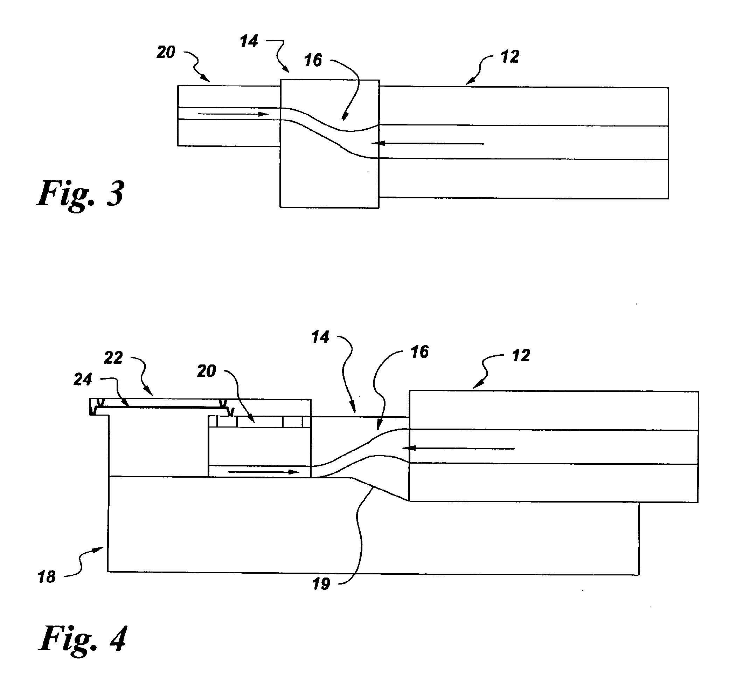

FIG. 3 is a top view of waveguide 16 in accordance with another embodiment of the present invention, and FIG. 4 is a side view of the waveguide of FIG. 3 which is similar to the embodiment of FIGs. 1-2 with different optical elements. The optical elements are typically selected from the group consisting of waveguides (which may comprise filled or hollow cores) 10 (FIGs. 1-2), fibers 12, light emitting devices 20 (FIGs. 3-4), light detecting devices (not shown in FIGs. 1-4), and combinations thereof.

As shown in FIG. 2, when a fiber and waveguide are used, typically fiber 12 has a larger diameter than the thickness of waveguide 10. In these situations, it is useful to provide a substrate 18 having a slope 19. The slope is also useful in the embodiment of FIG. 4 where light emitting device 20 is shown as being thinner than fiber 12. Also shown in FIG. 4 for purposes of example is an interconnect assembly 22 including electrical conductors 24 which may be fabricated by conventional high density interconnect techniques, for example.

In one embodiment, the method further comprises providing the photodefinable copolymer material by mixing tetrafluoropropyl methacrylate, methyl methacrylate, cyclohexanone, a chain transfer agent, and benzoyl peroxide; degassing, heating, and cooling the resulting mixture; and adding and mixing anisole and the epoxy monomer.

With the self-forming properties of the materials of the embodiments of FIGs. 1-4, a waveguide that interconnects two ports can be formed without active alignment. The increase of index of refraction close to where the light paths from the optical elements meet will further facilitate the concentration of light through the waveguide. This embodiment is robust in that common mechanical failures are less likely because mechanical parts are not needed to ensure the coupling. The self-formed waveguides provide smooth, low loss, and matched optical interconnect transitions and can compensate for multi-micrometer misalignments (including lateral, axial, and angular misalignments) among optoelectronic devices which occur during packaging. These embodiments are advantageous because volatilizing can result in forming a single-mode waveguide.

In a more specific embodiment, the light sent by the optical elements has a wavelength ranging from about 300 nanometers (due to ultraviolet loss in fused silica fiber) to about 500 nanometers ( due to degradation in room light), for example. Additionally, the light sent by the optical elements is typically selected so as not to damage the photodefinable copolymer material. For example, it is beneficial to control the light intensity to be slightly above a threshold condition for volatilization of the photodefinable copolymer material. Additionally, it is beneficial to perform the acts of sending the light and volatizing the uncured monomer in sequence two or more times with each subsequent sequence resulting in an extension of the waveguide. In a more specific embodiment, the period of time for sending light ranges from about twenty seconds to about fifty seconds and intervening periods of time when no light is sent range from about two minutes to about five minutes. The intervening periods can be selected to optimize and complete the volatilizing process.

One example experimental set up is as follows: multi-line ultraviolet light sources ranging from about 345 nanometers to about 365 nanometers; four sets of exposures for five seconds followed by diffusion at 65 ° C for five minutes; fiber of ultraviolet grade fifty micrometers core multi-mode; and waveguide length of 166 micrometers and width of fifty micrometers. Another example experimental set up is: multi-line ultraviolet light sources ranging from about 345 nanometers to about 365 nanometers; four sets of exposures for twenty seconds followed by diffusion at 65° C for five minutes; fiber of ultraviolet grade fifty micrometer core multi-mode; and waveguide length of 161 micrometers and width of fifty micrometers.

An acrylic/epoxy blend was found to be particularly advantageous for the "self-forming" waveguide because the waveguide can be formed in the exposed area, that is, where light comes out of the fiber, and thereby extend it. A polymer/monomer blend was evaluated for photo-patterning of waveguide structures and included an acrylic copolymer with epoxy. CY179 cycloaliphatic diepoxy resin (available from Vantico Inc, Brewster NY) was used because it was found compatible with the polymers, can be purified by vacuum distillation, had high vapor pressure and can be ultraviolet cured using a commercially available photo catalyst. When blended with the acrylic polymer, CY179 was found to be compatible with poly(methyl methacrylate) (PMMA), however, the refractive index difference for the two materials is not very high. Therefore, a copolymer of methyl methacrylate and tetrafluoropropyl methacrylate was synthesized for this evaluation. The refractive index of the copolymer is substantially less than that of the epoxy. Therefore, areas exposed to radiation which cures the epoxy will have a refractive index higher than areas not exposed, where the epoxy evaporates.

For acrylic polymers, there are also a substantial number of compatible acrylic (and polyacrylate) monomers available which can be photo-cured. However, photo-curing acrylates is typically accomplished in an inert ambient, and patterning equipment for doing so is not readily available. No special conditions are needed for photo-curing epoxy resins except for standard photo-patterning equipment which is readily available.

### EXAMPLE 1

The following example was originally carried out with patterning from an external source (as opposed to a "fixed" optical element) but is illustrative of the effect that light has on the identified materials.

An acrylic copolymer formulation was prepared which contained about 75 wt % of poly(methyl methacrylate) and 25 wt % poly(tetrafluoropropyl methacrylate). Into a glass container, capable of being sealed under vacuum, was distilled 19 grams of tetrafluoropropyl methacrylate, 56 grams of methyl methacrylate and 93 grams of cyclohexanone. Into this container was also added 0.15 gram of N-dodecanethiol, a chain transfer agent which also stabilizes the polymer system, and 0.19 gram of benzoyl peroxide. The mixture was degassed, sealed under vacuum and heated with mixing at 75⁰C for about 24 hours, followed by additional heating at 80⁰C for 24 hours. Once cooled, 55 grams of anisole was added to obtain a viscous, clear, and colorless acrylate copolymer consisting of about 75% poly(methyl methacrylate) and 25% poly(tetrafluoropropyl methacrylate), present as 33.5% solids in the cyclohexanone-anisole mixed solvent. Into a 35-gram portion of this blend was added an additional 10.7 grams of anisole, 5 grams of CY 179 epoxy monomer, 0.15 gram of Irganox 1010 antioxidant (available from Ciba Specialty Chemicals, Tarrytown, NY), and 0.13 gram of Cyracure UVI-6976 UV catalyst (available from Dow Chemical Co. Midland, MI). The resulting polymerizable composite contained about 70% by weight of the acrylate polymer and 30% by weight of the epoxy monomer. A five micrometer thick film of the polymerizable composite was prepared on a glass substrate by spin coating and was patterned with UV radiation. Dektak measurement of the topography of the resulting film of the composite polymeric material indicated a 3.7 micrometer film thickness in the UV-exposed areas, and a 2.6 micrometer film thickness in the un-exposed areas. Refractive index for the exposed areas was about 1.4% higher than that measured in the un-exposed areas.

Waveguides for the acrylic/epoxy composite typically require cross-linked cladding with relatively low refractive indexes. This material was obtained by preparing an approximately 50/50 wt% solids solution consisting of the acrylic copolymer used in the photo-patterned layer blended with a compatible, low refractive index diacrylate, butylene glycol diacrylate, with Ciba Irgacure 907 and 184 acrylic photo-curing catalyst (available from Ciba Specialty Chemicals, Tarrytown, NY) and Irgonox 1010. Spin cast films were baked a short time at 70°C to ensure solvent loss and then sealed in a N2 chamber with a synthetic silica window to allow exposure of the film to UV. A one minute exposure using the Karl Suss contact printer was adequate to cure the film and prevent any encroachment from subsequently applied layers. The refractive index for the cured film was less than 1.44, making it a suitable cladding layer.

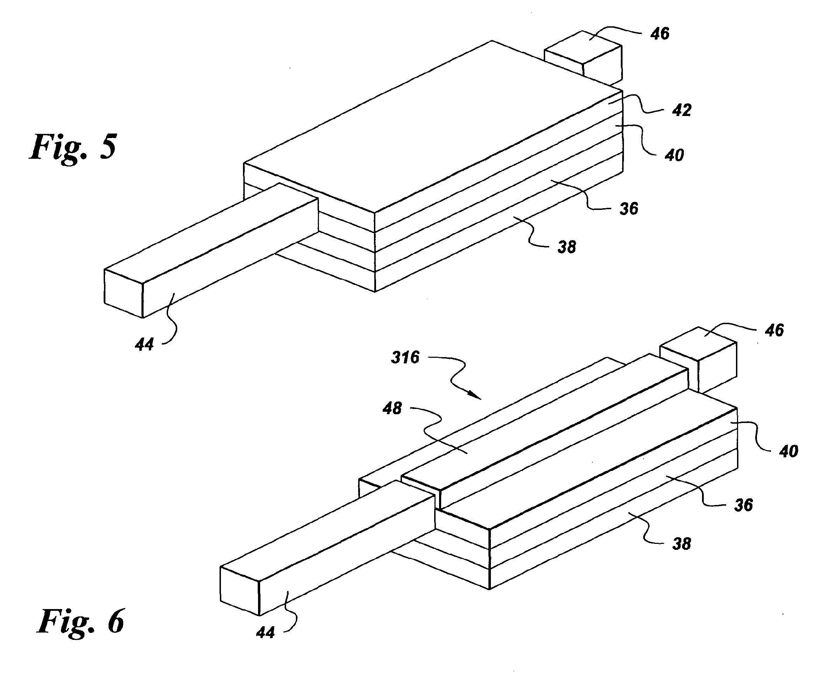

FIG. 5 is a perspective view of a partially fabricated ridge waveguide in accordance with another embodiment of the present invention, and FIG. 6 is a perspective view of the fabricated ridge waveguide 316 of FIG. 5. In one embodiment, a method for forming ridge waveguide 316 comprises depositing and curing a first core layer 40 on the substrate 36 (which in one embodiment has a lower cladding layer 38 situated on an opposing surface), and the act of depositing the photodefinable copolymer material over the substrate comprises depositing a second core layer 42 over the first core layer. In a more specific aspect, first core layer 40 has a higher refractive index than lower cladding layer 38 and is fully cured (meaning at least about 90% of monomer present has polymerized or volatilized). Second core layer 42 comprises a material capable of self-forming (and not fully cured until after the writing) and may (but need not) comprise the same material as first core layer 40. Typically, the self-forming (self-writing) occurs by fixing two optical elements (shown as elements 44 and 46) relative to second core layer 42 and applying light towards each element. After self-forming, the excess material can be removed to form ridge waveguide 316.

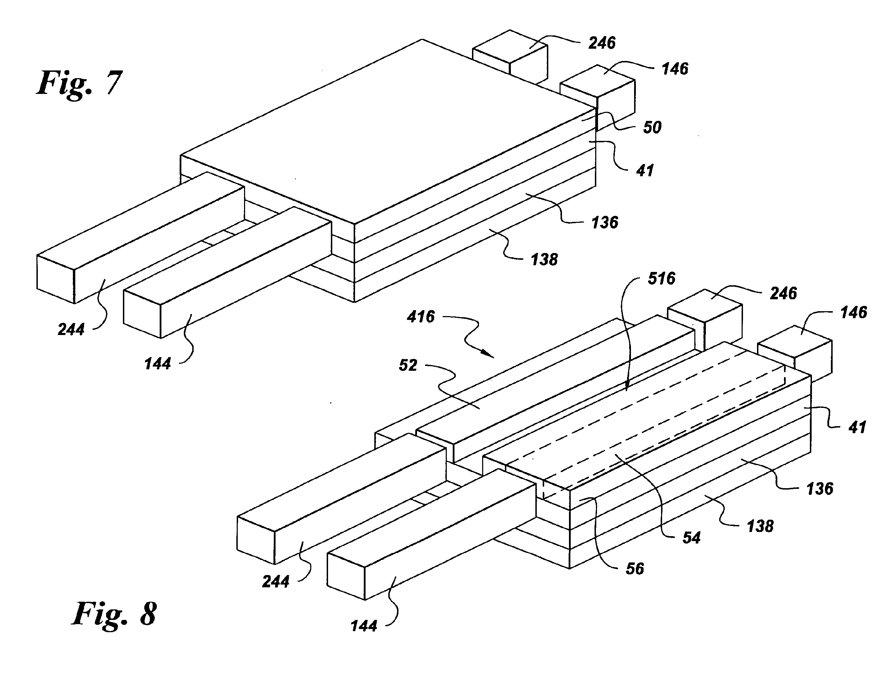

FIG. 7 is a perspective view of partially fabricated strip loaded waveguides in accordance with other embodiments of the present invention, and FIG. 8 is a perspective view of the fabricated loaded waveguides 416 and 516 of FIG. 7. One method for forming the loaded waveguide comprises depositing and curing a core layer 41 on substrate 136 (which in one embodiment has a lower cladding layer 138 situated on an opposing surface), and depositing the photodefinable copolymer material over the substrate comprises depositing a cladding layer 50 over core layer 41. In this embodiment, cladding layer 50 is used for self-forming with light from optical elements 144 and 244 for waveguide 516 and from optical elements 244 and 246 for waveguide 416. In the example of waveguide 416, excess material is removed to leave cladding 52 for the strip loaded waveguide whereas in the example of waveguide 516, excess material 56 remains around cladding 54. Either way, in the resulting loaded waveguide, light energy will be confined and guided mostly with the core layer underneath.

For a ridge or loaded waveguide, most of the light energy is guided within the lower core layer. Therefore, the performance of such waveguides is less sensitive to roughness of sidewalls or any imperfection that may be raised during self-forming.

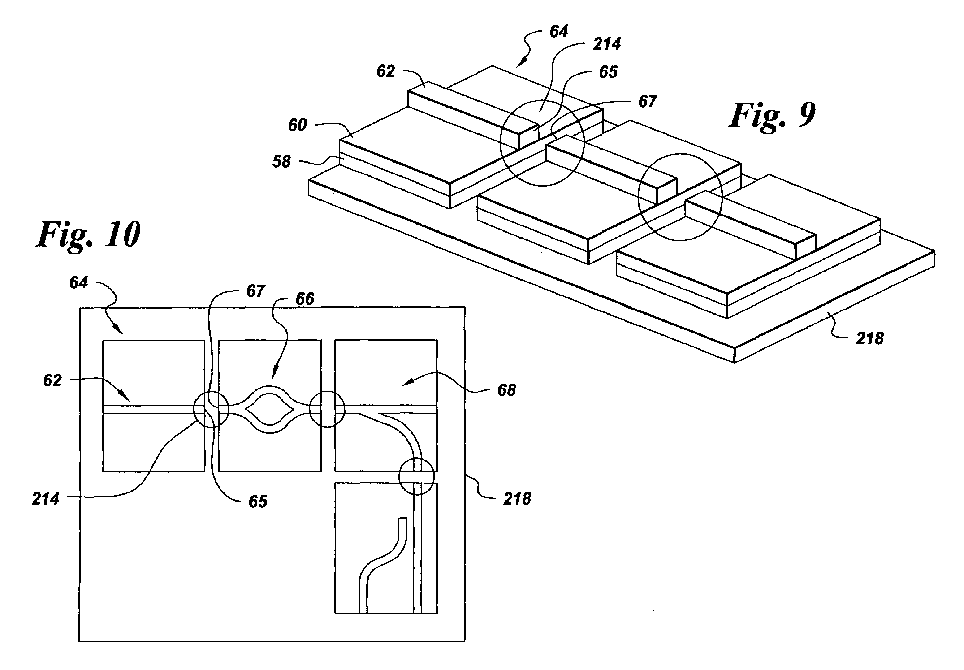

Self-forming techniques can be useful for multi-optoelectronic-chip package and integration. FIG. 9 is a perspective view of a waveguide coupling arrangement in accordance with another embodiment of the present invention, and FIG. 10 is a top view of the waveguide coupling arrangement of FIG. 9. In one embodiment, the optical elements comprise photonic modules 64 and are fixed on a substrate 218. In this embodiment, depositing the photodefinable copolymer material 214 comprises depositing the photodefinable copolymer material between optically active segments 65 and 67 of the photonic modules. In one embodiment, for example, each photonic module comprises cladding 58, a substrate 60 overlying cladding 58, and a waveguide 62 overlying substrate 60.

Individual photonic modules 64 may be adapted for specific functions based on the planar or multi-layer (three dimensional) waveguide structures. Examples shown in FIG. 10 are Mach Zender Interferometer 66 and Y splitter 68. Photonic modules 64 are placed on a common supporting substrate (that can be integrated with thermal management) by either solder-bump self-assembling or adhesives. Because each chip can be well tested before curing, a better overall yield can be achieved.

FIG. 11 is a top view of a waveguide 616. In one embodiment, a method of forming and using waveguide 616 comprises: depositing a photodefinable copolymer material 14 on a substrate 18 (FIG. 2); fixing optical elements 220 and 10 relative to the photodefinable copolymer material, at least one of the optical elements 220 comprising a splitter 26; sending light through the at least one of the optical elements and the photodefinable copolymer material towards another of the optical elements, wherein sending comprises supplying light through the at least one of the optical elements through a first path 28 of the splitter; volatilizing uncured monomer from the photodefinable copolymer material to form the waveguide; and using the waveguide by transmitting an optical signal through a second path 21 of the splitter.. In a more specific embodiment, light is sent through each of the optical elements and the photodefinable copolymer material towards the other of the optical elements.

The embodiment of FIG. 11 permits the combination of multiple wavelengths while minimizing signal loss. After fabrication of waveguide 616, the first path can be disconnected if desired. Splitter 26 need, not be any specific ratio of splitter. Coupling efficiency of the writing laser is not critical because laser power can be easily adjusted to compensate. The embodiment of FIG. 11 may be used in separately or in combination with the specific materials set forth above.

In a more specific aspect, as set forth in more detail with respect to Example 2, sending light through at least one of the optical elements comprises using an a writing light source 88 to supply light through the first path of a splitter and expose the waveguide and using a signal light source 188 to supply light through the second path of the splitter. In this aspect, the resulting waveguide is monitored to evaluate the path of the signal light. Splitter 26 may be lithographically defined and aligned with the signal light source so that, once the waveguide is self-formed at the exit of the splitter, the signal light is efficiently coupled into the self-formed waveguide.

### EXAMPLE 2

An experimental setup was developed to extend the demonstrated work in multi-mode optical fiber to single-mode optical fiber. With the use of a single-mode one-by-two beam splitter, signal laser light was coupled from a HeNe laser (632nm) and writing laser light was coupled from an Argon laser (407nm) into the single-mode fiber with one end embedded into polymer material of the type described above with respect to FIGs. 1-4. The 632nm light was use as a visual aid during the experiment. The 407nm light was used to expose the polymer material and create the waveguide. The polymer embedded end of the fiber was monitored with a camera during the experiment. By applying short pulses of 407nm light, an index contrast was slowly created in the polymer, thereby extending the core region of the optical fiber into the polymer. Through trial and error, HeNe laser light was guided in the polymer over a distance of a few hundred micrometers.

FIG. 12 is a top view of a waveguide 116. In one embodiment, a method of forming waveguide 116 comprises: fixing optical elements 110 and 112 relative to each other, each having an optical surface 11 or 13; providing a blob 114 over at least portions of the optical surfaces of the optical elements (as stated above, "over" does not require direct touching), the copolymer blob comprising a photodefinable copolymer material which results in sufficient surface tension with respect to the optical surfaces to result in the blob having a curved surface 15; sending light through each of the optical elements and the blob towards the curved surface and another of the optical elements with an incident angle from one (herein meaning at least one) of the optical elements with respect to the curved surface being larger than a total internal reflection condition determined by an index of refraction difference between the blob and air surrounding the blob; and volatilizing uncured monomer from the blob to form the waveguide. Curved surface 15 may have any desired shape that permits reflection. Although the surface is typically arced, a triangular surface can alternatively be used.

In a resulting structure embodiment, waveguide 116 comprises: blob 114 over optical surfaces 11 and 13 of optical elements 110 and 112 fixed relative to each other. The blob comprises a pre-cured copolymer material having sufficient surface tension with respect to the optical surfaces to form the curved surface 15. A core portion of the blob comprises a material having a higher index of refraction than another portion of the blob and forms a reflective path between the optical surfaces. In a more specific embodiment, the photodefinable copolymer material comprises methyl methacrylate, tetrafluoropropyl methacrylate, and an epoxy monomer.

Selection of the refractive index of the blob material relative to the optical elements and an appropriate mirror-like shape will result in a lensing effect on the light coming from both optical elements. Continuing exposure will create a self-forming waveguide to interconnect the optical elements. In one example embodiment, the index difference of the blob relative to the optical elements is selected to be about 1.67 to 1.

The embodiment of FIG. 12 may be used in separately or in combination with the specific materials set forth above. In a more specific embodiment, the blob comprises a polymer binder and sufficient quantities of an uncured monomer to diffuse into the irradiated area of the blob during volatilizing. In a still more specific embodiment, the method further comprises, when sufficient volatizing and diffusion have occurred, blanket-exposing the blob. The waveguide in a blob will typically be formed by a process of both diffusion of (additional) monomer into the exposed (catalyst activated) area and curing, as well as diffusion and volatilizing uncured monomer from the copolymer blend. Optionally, this process can be "frozen" at any time by blanket exposing the blob, thereby stopping further diffusion and volatilizing of uncured monomer by polymerizing it all. Blanket-exposing may be advantageous to control shrinkage and refractive index contrast between the waveguide and surrounding material.

In another more specific embodiment, fixing the optical elements 110 and 112 relative to each other comprises positioning one optical element (shown as waveguide 110 for purposes of example) over a horizontal surface of substrate 118 and inserting another optical element (shown as optical fiber 112 having cladding 32 and a core 30 for purposes of example) in a vertical opening 33 of the substrate. As used herein "over" means in physical contact with or having an intermediate layer therebetween. Additionally, the orientation of the layer in operation (after fabrication) is not critical.

In another more specific embodiment, an additional step, after volatilizing, is depositing a reflection enhancing layer 23 over at least a portion of the curved surface of the blob. In one aspect of this embodiment, the reflection enhancing layer comprises a metal.

In another more specific embodiment, an additional step, prior to providing the blob, is to treat optical surfaces 11 and 13 to tailor the surface roughness. "Tailor the surface roughness" may mean increasing or decreasing depending upon the nature of the blob material. In one aspect of this embodiment, treating comprises polishing. In another aspect of this embodiment, treating comprises applying a coating layer 17 prior to providing the blob. One example coating layer material is a polymer.

FIG. 13 is a side view of a waveguide 216. In one embodiment, a method of forming waveguide 216 comprises: fixing optical elements 70 and 76 relative to each other, each having an optical surface 71 or 77; aligning a mirror 78 to direct light from one of the optical elements to the other of the optical elements; providing a photodefinable copolymer material 80 between the optical surfaces and the mirror; sending light through at least one of the optical elements towards the other of the optical elements; and volatilizing uncured monomer from the photodefinable copolymer material to form the waveguide.

In a more specific embodiment, sending light comprises sending light through each of the optical elements towards the other of the optical elements. A benefit of this more specific embodiment is that the precision in aligning of the optical elements can be reduced.

In a structure embodiment, the resulting waveguide 216 comprises: optical elements 70 and 76 fixed relative to each other and each having an optical surface 71 or 77; mirror 78 aligned to direct light from one of the optical elements to the other of the optical elements; and photodefined copolymer material 80 between the optical surfaces and the mirror. A core portion of the copolymer material comprises a material having a higher index of refraction than another portion of the copolymer material and forms a reflective path between the optical surfaces. In a more specific embodiment, the photodefinable copolymer material comprises methyl methacrylate, tetrafluoropropyl methacrylate, and an epoxy monomer.

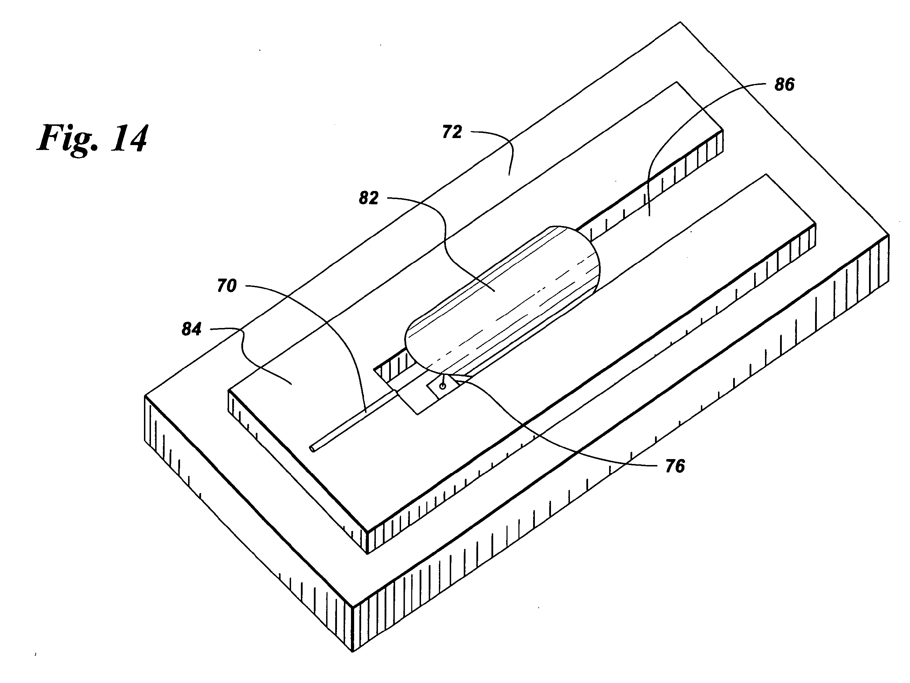

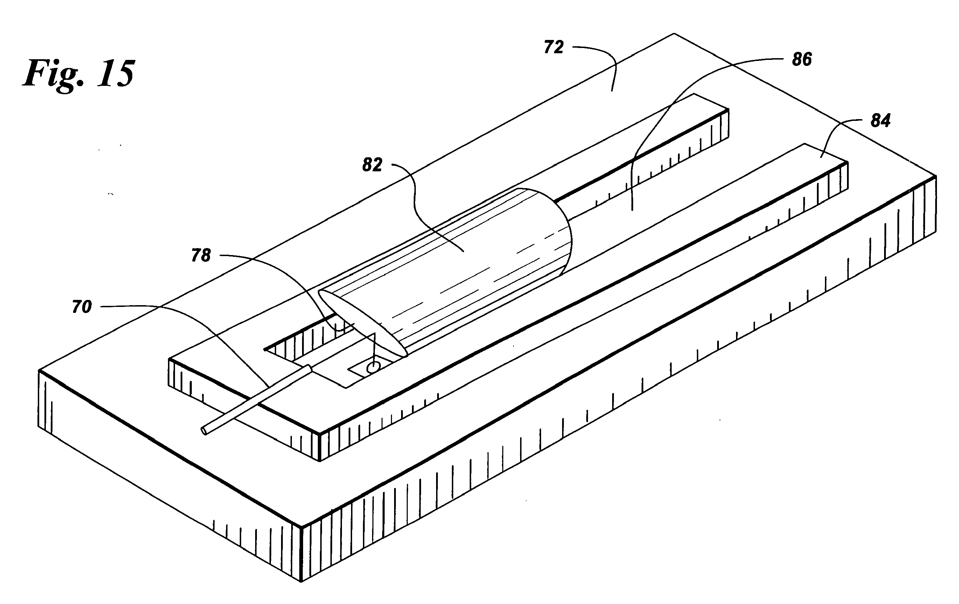

The embodiment of FIG. 13 may be used in separately or in combination with the materials set forth above. Additionally, the embodiment of FIG. 13 has benefits which extend beyond the self-forming waveguide context as are further described with respect to FIGs. 14 and 15 which are perspective views of an optical path formation arrangement in accordance with another embodiment of the present invention.

In one embodiment, a method of forming an optical path comprises: fixing optical elements 70 and 76 (FIG. 14) relative to each other, each having an optical surface 71 or 77 (FIG. 13); translating and rotating a mirror 78 (FIG. 15) until the mirror is aligned to optimally direct light from one of the optical elements to the other of the optical elements; and securing the aligned mirror in position. "Securing" is used herein in a different sense than fixing to cover some embodiments wherein the mirror will remain after optical path formation and other embodiments wherein the mirror is temporarily positioned but ultimately removed.

In a resulting structure embodiment, an optical path comprises: optical elements 70 and 76 fixed relative to each other, each having an optical surface 71 or 77 (FIG. 13); and mirror 78 situated on a fiber and aligned to optimally direct light from one of the optical elements to the other of the optical elements. In a more specific aspect, the copolymer material comprises methyl methacrylate, tetrafluoropropyl methacrylate, and an epoxy monomer.

In one embodiment light from the one of the optical elements and the mirror is translated and rotated to maximize light detected by the other of the optical elements. Thus, positioning a detector (not shown) on the opposite side of the injected light allows for guidance during alignment. Optimization can be accomplished with ease by maximizing the detector output power while adjusting the fiber optic mirror through rotation in the notch, translation along the notch, or combinations thereof.

In a more specific embodiment, fixing the optical elements comprises fixing the optical elements so that the optical surfaces are substantially orthogonal. The present invention is not limited to orthogonal embodiments however. Furthermore, although light is shown as being transmitted downward, this orientation is only for purposes of example and is not intended to be limiting.

In another more specific embodiment, fixing comprises positioning one optical element (shown as waveguide 70 for purposes of example) over a horizontal surface of a substrate 72 (shown as having a waveguide support 84, for purposes of example, which adjusts the position of the waveguide with respect to mirror 78) and positioning another optical element (shown as hole or core material 76 for purposes of example) in a vertical opening 74 of the substrate (FIG. 13). In a related aspect, the method further comprises providing a substrate including a dielectric layer 84 thereon which in one embodiment functions as a waveguide support, the dielectric layer having a notch 86 therein with at least one end situated over the vertical opening, wherein the mirror is situated on a mirror support 82 such as a fiber, and wherein translating comprises moving the fiber down the notch and rotating comprises rotating the fiber within the notch. In a more specific embodiment, the dielectric layer comprises KAPTON^{™} polyimide (available from Dupont Company).

In a still more specific aspect, which is a variant of the embodiment of FIG. 13, securing comprises providing a photodefinable copolymer material 80 between the optical surfaces and the mirror. In an even more specific aspect, the optical path comprises a waveguide, and the method further comprises sending light through at least one of the optical elements towards the other of the optical elements; and volatilizing uncured monomer from the photodefinable copolymer material to form the waveguide.

In another aspect, securing comprises providing an optical material 80 (which is not necessarily photodefinable) between the optical surfaces and the mirror, curing the material, and then removing the mirror. In embodiments wherein the mirror is removed, it is useful to provide a protection layer (not shown) overlying cured optical material 80. To protect the exposed portion of the light path and to reduce losses by acting as a cladding layer. In one embodiment, the optical material comprises an ultraviolet curable index-matching material, for example.

While only certain features of the invention have been illustrated and described herein, many modifications and changes will occur to those skilled in the art. It is, therefore, to be understood that the appended claims are intended to cover all such modifications and changes as fall within the true spirit of the invention.

## Claims

1. A method of forming a waveguide (16) comprising:
depositing a photodefinable copolymer material (14) comprising methyl methacrylate, tetrafluoropropyl methacrylate, and an epoxy monomer over a substrate (18);
fixing optical elements (10, 12) relative to the photodefinable copolymer material;
sending light through at least one of the optical elements and the photodefinable copolymer material towards the other of the optical elements; and
volatilizing uncured monomer from the photodefinable copolymer material to from the waveguide.
